# EUROPEAN PATENT APPLICATION

(11) **EP 4 818 226 A1**
(43) Date of publication of application: **07.10.2026**
(21) Application number: 24910049.6
(22) Date of filing: 20.09.2024
(51) Int. Cl.: C08G 63/20, C08G 63/685, C08G 63/78, B65D 65/46, A01G 13/20

(54) **BIODEGRADABLE ALIPHATIC POLYESTER, AND PREPARATION METHOD THEREFOR AND USE THEREOF**

(30) Priority: 29.12.2023 CN 202311856172
(71) Applicant: KINGFA SCI. & TECH. CO., LTD., Guangzhou, Guangdong 510663 (CN); Zhuhai Kingfa Biomaterial Co., Ltd., Zhuhai, Guangdong 519050 (CN)
(72) Inventor: ZENG, Xiangbin, Guangzhou, Guangdong 510663 (CN); CHEN, Pingxu, Guangzhou, Guangdong 510663 (CN); YE, Nanbiao, Guangzhou, Guangdong 510663 (CN); LU, Changli, Guangzhou, Guangdong 510663 (CN); FU, Xuejun, Guangzhou, Guangdong 510663 (CN); WANG, Chaojun, Guangzhou, Guangdong 510663 (CN); OUYANG, Chunping, Guangzhou, Guangdong 510663 (CN); ZHANG, Erjie, Guangzhou, Guangdong 510663 (CN); GUO, Zhilong, Guangzhou, Guangdong 510663 (CN)
(74) Representative: Petraz, Gilberto Luigi
(86) International application number: PCT/CN2024/120067
(87) International publication number: WO 2025/139104

(57) **Abstract**

Disclosed in the present invention are a biodegradable aliphatic polyester, and a preparation method therefor and use thereof. The biodegradable aliphatic polyester includes units derived from at least one aliphatic dicarboxylic acid and at least one aliphatic diol, and satisfies the following conditions: 1.54 ≤ Mw/Mn ≤ 1.98, and Mw/q ≥ 50,000, where q is a mass percentage of a low-molecular polymer with a molecular weight of ≤ 1,000 Dalton of the biodegradable aliphatic polyester as determined by gel permeation chromatography (GPC). According to the present invention, by regulating the molecular weight distribution of the biodegradable aliphatic polyester and the mass percentage of the low-molecular polymer with the molecular weight of lower than 1,000 Dalton, the biodegradable aliphatic polyester has both good barrier properties and excellent self-adhesiveness.

## Description

### FIELD OF TECHNOLOGY

The present invention relates to the technical field of polymer compounds, and more specifically relates to a biodegradable aliphatic polyester, and a preparation method therefor and use thereof.

### BACKGROUND

Plastic wraps are a kind of film plastic packaging products, which can not only prolong the storage time of foods in refrigerators, but also retain the moisture of stored foods to maintain their freshness; meanwhile, when used for individual packaging of foods, they can also effectively prevent cross-contamination of flavors between foods; and more importantly, when used for opened beverages, fruits, or tableware, they can also play a role in isolating bacteria to improve hygiene and safety. Therefore, the plastic wraps have been widely used in fields such as household life, supermarkets, or industrial food packaging. However, most conventional plastic wraps adopt a polyethylene film, a biaxially oriented polyester (BOPET), a biaxially oriented polypropylene (BOPP) film, or a chlorinated polypropylene (CPP) film, etc., and all of these plastic wraps are not biodegradable and easily lead to the problem of "white pollution" after being discarded.

To mitigate environmental problems after the traditional plastic wraps are discarded, poly(butylene adipate-co-terephthalate) (PBAT), as a biodegradable polyester material, has been adopted to replace the above conventional film materials to improve degradability of the plastic wraps. PBAT not only possesses the degradability of aliphatic polyesters but also possesses mechanical properties of aromatic polyesters, and has good ductility and elongation at break. However, plastic wraps made from the biodegradable polyester, PBAT, have poor barrier properties, leading to foods that require longer storage time being prone to spoilage during storage, with a limited long-term preservation effect. Meanwhile, the plastic wraps also need to possess good self-adhesiveness to better meet use demands.

### SUMMARY

The purpose of the present invention is to provide a biodegradable aliphatic polyester to overcome the deficiencies and shortcomings of poor barrier properties and self-adhesiveness of existing biodegradable polyester PBAT.

Another purpose of the present invention is to provide a method for preparing the biodegradable aliphatic polyester.

Another purpose of the present invention is to provide use of the above biodegradable aliphatic polyester in preparation of a food packaging film, an industrial packaging film, or an agricultural mulch film.

The above purposes of the present invention are achieved through the following technical solutions.

The present invention protects a biodegradable aliphatic polyester, where the biodegradable polyester includes units derived from at least one aliphatic dicarboxylic acid and units derived from at least one aliphatic diol, and satisfies the following conditions: 1.54 ≤ Mw/Mn ≤ 1.98, and Mw/q ≥ 50,000,
where q is a mass percentage of a low-molecular polymer with a molecular weight of ≤ 1,000 Dalton, as determined by gel permeation chromatography (GPC), of the biodegradable aliphatic polyester.

Preferably, the Mw/Mn is 1.65-1.85, and 70,000 ≤ Mw/q ≤ 110,000.

The molecular weight and molecular weight distribution (Mw/Mn) of a polymer as well as the type and content of an oligomer are affected by various factors, such as types of monomers, proportions of monomers, types and addition amounts of branching agents and chain extenders, branching structures, polymerization processes (continuous method or batch method), reaction temperature, reaction time, and reaction pressure, etc.

A number-average molecular weight (Mn) of the biodegradable aliphatic polyester of the present invention is 45,000-85,000, and may be specifically 45,000, 50,000, 55,000, 60,000, 65,000, 70,000, or 80,000; a weight-average molecular weight (Mw) is 87,000-132,000, and may be specifically 90,000, 95,000, 100,000, 105,000, 110,000, 115,000, 120,000, 125,000, or 130,000; and a mass percentage (q) of a low-molecular polymer with a molecular weight of ≤ 1,000 Dalton is lower than 1.93%, and may be specifically 1.11%, 1.35%, 1.38%, 1.55%, 1.67%, 1.72%, or 1.91%.

Optionally, the units derived from the aliphatic dicarboxylic acid include an aliphatic dicarboxylic acid having 2-22 carbon atoms in a main chain and an ester thereof. Specifically, the aliphatic dicarboxylic acid is at least one of succinic acid, adipic acid, azelaic acid, sebacic acid, or tridecanedioic acid; and is preferably succinic acid and/or adipic acid.

Optionally, the units derived from the aliphatic diol include an aliphatic diol having 2-13 carbon atoms in a main chain. Specifically, the aliphatic diol is at least one of 1,2-ethanediol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, or 1,13-tridecanediol; and is preferably 1,4-butanediol and/or 1,3-propanediol.

Specifically, the biodegradable aliphatic polyester includes the following components:
A) an aliphatic dicarboxylic acid component:
   a1) 65-100 mol% of a derivative of succinic acid or an ester thereof, or a mixture thereof, calculated based on a total amount of a1) and a2); and
   a2) 0-35 mol% of a derivative of adipic acid or an ester thereof, or a mixture thereof, calculated based on the total amount of a1) and a2), where a sum of molar percentages of the components a1) and a2) is 100 mol%; and
B) an aliphatic diol component being 1,4-butanediol, where a molar ratio of the aliphatic diol component to the aliphatic dicarboxylic acid component is ≥ 1.

Preferably, in the aliphatic dicarboxylic acid component, a1) is 73-80 mol% of a derivative of succinic acid or an ester thereof, or a mixture thereof; and in the aliphatic dicarboxylic acid component, a2) is 20-27 mol% of a derivative of adipic acid or an ester thereof, or a mixture thereof.

A water vapor transmission rate of the biodegradable aliphatic polyester, as determined according to an ASTM F1249-13 standard under conditions of a sample thickness of 12±2 µm at 40°C and RH = 60%, is ≤ 750 g/(d·m²); preferably ≤ 480 g/(d·m²); and more preferably ≤ 330 g/(d·m²).

The biodegradable aliphatic polyester has good self-adhesiveness, the self-adhesiveness is characterized by shear peel strength, and higher shear peel strength indicates better self-adhesiveness of a film material. A shear peel strength of the biodegradable aliphatic polyester, as determined according to a GB/T 10457-2009 standard under a condition of a sample thickness of 12±2 µm, is ≥ 0.60 N/cm²; preferably ≥ 0.72 N/cm²; and more preferably ≥ 0.85 N/cm².

The present invention further protects a method for preparing the aforementioned biodegradable aliphatic polyester, which includes the following steps:
step i): mixing the aliphatic dicarboxylic acid or a derivative thereof (component A) with the aliphatic diol (component B) to carry out an esterification reaction or a transesterification reaction to obtain an esterification product;
step ii): subjecting the esterification product in the step i) to a pre-polycondensation reaction to obtain a pre-polymerized product; and
step iii): subjecting the pre-polymerized product in the step ii) to a polycondensation reaction until an acid value of a formed polycondensation product, as determined according to a GB/T 32366-2015 standard, is 15-50 mol/t, to obtain the biodegradable aliphatic polyester,
where an acid value of the esterification product in the step i), as determined according to the GB/T 32366-2015 standard, is 360-770 mol/t; and an acid value of the pre-polymerized product in the step ii), as determined according to the GB/T 32366-2015 standard, is 70-110 mol/t.

The aforementioned aliphatic dicarboxylic acid or a derivative thereof may be used alone or in the form of a mixture of two or more kinds. In the present invention, in the step i), a molar ratio of the component A to the component B is 1:(1.2-2.4), with specific values within 1.2-2.4 being 1.2, 1.3, 1.4, 1.5, 1.6, 1.7, 1.8, 1.9, 2, 2.1, 2.2, 2.3, 2.4, etc.; and is further preferably 1:(1.4-1.8).

In the step i), in a case of two or more aliphatic dicarboxylic acids or derivatives thereof, in addition to that all the aliphatic dicarboxylic acids or derivatives thereof are blended with the aliphatic diol (component B) for mixing and esterification as described in the step i), an individual aliphatic dicarboxylic acid or a derivative thereof may also independently undergo esterification with the aliphatic diol (component B) separately. For example, the component a1) of the aliphatic dicarboxylic acid undergoes an esterification reaction with the aliphatic diol (component B), the component a2) of the aliphatic dicarboxylic acid undergoes an esterification reaction with the aliphatic diol (component B), and then two esterification products are mixed.

In a case of adopting an independent esterification process, a molar ratio of the component a1 to the component B is 1:(1.1-1.8), and may be specifically 1:1.2, 1:1.3, 1:1.4, 1:1.5, 1:1.6, or 1:1.7; and a molar ratio of the component a2 to the component B is 1:(1.3-2.0), and may be specifically 1:1.4, 1:1.5, 1:1.6, 1:1.7, 1:1.8, or 1:1.9. A temperature of the esterification reaction is 150-200°C, preferably 180-195°C; a pressure is 0.7-1.1 bar, preferably 0.8-1.0 bar; and a reaction time is 2-4 hours. Under independent esterification conditions, an acid value of the esterification product corresponding to each esterification, as determined according to the GB/T 32366-2015 standard, is 360-770 mol/t.

Specifically, the above preparation method includes the following steps.

In the step i), after the aliphatic dicarboxylic acid or a derivative thereof is mixed with the aliphatic diol, a catalyst may be added or not. When the catalyst is added, it may be added all at once or in multiple portions; and a total mass of the catalyst is 0.001-1 wt% of a mass of the aliphatic polyester, and may be, for example, 0.001 wt%, 0.002 wt%, 0.005 wt%, 0.008 wt%, 0.01 wt%, 0.02 wt%, 0.05 wt%, 0.08 wt%, 0.1 wt%, 0.2 wt%, 0.3 wt%, 0.4 wt%, 0.5 wt%, 0.6 wt%, 0.7 wt%, 0.8 wt%, 0.9 wt%, 1 wt%, etc.; and is preferably 0.03-0.2 wt%.

The above catalyst usually includes a zinc compound, an aluminum compound, and a titanium compound. It is particularly a titanium compound. Compared with a tin compound, an antimony compound, a cobalt compound, and a lead compound commonly used in literature, the titanium compound (such as tetrabutyl titanate or tetraisopropyl titanate) has another advantage that the catalyst at a residual amount remaining in a product or a downstream product has low toxicity. The toxicity of catalysts is especially important in biodegradable polyesters, as they can directly enter the environment in the form of compost bags or mulch films.

In the step i), calculated based on a total weight of the aliphatic dicarboxylic acid or a derivative thereof and the aliphatic diol, 0-3 wt%, preferably 0.01-2 wt%, more preferably 0.05-1 wt%, and particularly preferably 0.08-0.20 wt% of a crosslinking agent having at least three functional groups may also be included.

The above crosslinking agent having at least three functional groups is a compound having 3-6 hydroxyl groups. Specifically, it may be at least one of tartaric acid, citric acid, malic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, or pyromellitic dianhydride; preferably a polyol, such as trimethylolpropane, pentaerythritol, or glycerol; and particularly preferably glycerol.

The aliphatic dicarboxylic acid or a derivative thereof and the aliphatic diol are mixed and then heated. In the step i), a temperature of the reaction system is set at 150-200°C, preferably 165-190°C; and a pressure is set at 0.7-1.1 bar, preferably 0.8-1.0 bar. In the step i), the reaction may be carried out in a mixing device, with a specific reaction time of 2-4 hours, to produce an esterification product with an acid value of 360-770 mol/t as determined according to GB/T 32366-2015.

In the step i), the excessive diol component is generally removed by distillation and returned to a loop after distillation and purification, with a purity of the diol component after distillation and purification being ≥ 95%.

In the step ii), the esterification product in the step i) (if the catalyst is added in multiple portions, then together with the remaining catalyst) is added into a reactor suitable for the pre-condensation reaction. It is confirmed that the reactor suitable for the pre-polycondensation reaction includes a tubular reactor, a cascade reactor (Kesselkaskade), or a bubble cap tower, especially a downward-flow cascade reactor, which may have a degassing unit if appropriate. A reaction temperature is usually set at 230-260°C, preferably 235-245°C; a reaction pressure is usually set at 0.3-0.6 bar, preferably 0.35-0.55 bar; a reaction time is 70-200 minutes; a prepolymer product with an acid value of 70-110 mol/t as determined according to GB/T 32366-2015 may be produced; and preferably, the acid value of the prepolymer product is controlled within a range of 82-100 mol/t.

In the polycondensation step iii), depending on actual conditions and demands, a catalyst passivator may be mixed with the prepolymer product. Specifically, the above passivator is a phosphorus compound, an organic phosphite (such as phosphorous acid), or phosphoric acid. For example, if a highly active titanium catalyst is used, the passivator may be added. Calculated based on an amount of a polymer after the step iii), an addition amount of the passivator may be 0.001-0.1 wt%, preferably 0.01-0.05 wt%. A molar ratio of Ti/P is preferably (1.1-1.5):1, particularly preferably (1.1-1.3):1.

In addition, depending on actual conditions and demands, a color stabilizer for a condensation process may also be mixed with the prepolymer product in the polycondensation step iii). The usable color stabilizer is mainly a phosphorus compound and may be specifically at least one of phosphoric acid, phosphorous acid, triphenyl phosphite, triphenyl phosphate, sodium hypophosphite, or sodium phosphite. Generally, the use of the color stabilizer tends to reduce a condensation rate, but triphenyl phosphate is a particularly suitable color stabilizer because it has essentially no adverse impact on the condensation rate.

Calculated based on the amount of the polymer after the step iii), an addition amount of the color stabilizer may be 0.001-1.5 wt%, preferably 0.01-1.0 wt%. Preferably, the molar ratio of Ti/P is 1.0:(0.3-1.0), more preferably 1.0:(0.5-1.0).

Further, depending on actual conditions and demands, an activator for the condensation process may also be mixed with the prepolymer product in the polycondensation step iii). Optionally, the activator is a phosphorus compound and may be specifically at least one of disodium hydrogen phosphate, calcium hypophosphite, calcium phosphite, calcium phosphate, sodium hypophosphite, sodium phosphite, triphenyl phosphite, triphenyl phosphate, trimethyl phosphate, triethyl phosphate, tripropyl phosphate, or tributyl phosphate. Preferably, the activator is disodium hydrogen phosphate and/or sodium phosphite.

Specifically, calculated based on the amount of the polymer after the step iii), an addition amount of the activator may be 0.001-1.5 wt%, preferably 0.01-1.0 wt%. Preferably, the molar ratio of Ti/P is (1.0-1.5):1, more preferably (1.1-1.3):1.

The color stabilizer may also be used in combination with the activator. For example, triphenyl phosphate as the color stabilizer is used in combination with disodium hydrogen phosphate as the activator.

A reactor for the polycondensation reaction in the step iii) may be a disc reactor or a cage reactor; a reaction temperature is generally 235-260°C, preferably 240-255°C; a pressure is generally 0.2-5 mbar, preferably 0.5-3 mbar; a reaction time is 45-110 minutes, preferably 60-90 minutes; and a polycondensation product with an acid value of 15-50 mol/t as determined according to GB/T 32366-2015 can be produced.

Specifically, the polycondensation product in the step iii) may also be added together with a chain extender into an extruder (added into a continuous kneader (List reactor), or added into a static mixer) to undergo a chain propagation reaction.

Specifically, the static mixer may use an SMR, SMX, or SMXL component, or a combination thereof. The List reactor may be a single-shaft DISCOTHERM B or double-shaft CRP or ORP reactor. The extruder may be a single-screw extruder or a twin-screw extruder. Preferably, the above chain propagation reaction is carried out in an extruder. After chain propagation, the finally obtained polyester has an acid value of 15-50 mol/t as determined according to GB/T 32366-2015.

Optionally, the above chain extender includes at least one of an isocyanate, a peroxide, an epoxide, an oxazoline, an oxazine, a caprolactam, or a carbodiimide.

Specifically, the isocyanate may be an aromatic diisocyanate or an aliphatic diisocyanate. For example, the aromatic diisocyanate may be at least one of toluene-2,4-diisocyanate, toluene-2,6-diisocyanate, diphenylmethane-2,2'-diisocyanate, diphenylmethane-2,4'-diisocyanate, diphenylmethane-4,4'-diisocyanate, naphthalene-1,5-diisocyanate, or xylylene diisocyanate. Preferably, the aromatic diisocyanate is diphenylmethane-2,2'-diisocyanate, diphenylmethane-2,4'-diisocyanate, or diphenylmethane-4,4'-diisocyanate.

Isocyanates that may also be used in the present invention include tris(4-isocyanatophenyl)methane with three rings. The polynuclear aromatic diisocyanate may be formed during production of a diisocyanate with one or two rings.

For the present invention, the aliphatic diisocyanate may be any linear or branched alkylene diisocyanate or cycloalkylene diisocyanate containing 2-20 carbon atoms, preferably 3-12 carbon atoms. For example, the aliphatic diisocyanate may be hexamethylene diisocyanate, pentamethylene diisocyanate, isophorone diisocyanate, or diisocyanate of methylene bis(4-isocyanatocyclohexane); and is preferably hexamethylene diisocyanate.

Calculated based on a total weight of the biodegradable aliphatic polyester, a use amount of the isocyanate may be 0.05-2 wt%, preferably 0.1-1.5 wt%.

Specifically, the above peroxide may be at least one of benzoyl peroxide, 1,1-di(tert-butylperoxy)-3,3,5-trimethylcyclohexane, 1,1-di(tert-butylperoxy)methylcyclododecane, n-butyl 4,4-di(butylperoxy)valerate, dicumyl peroxide, tert-butyl peroxybenzoate, dibutyl peroxide, α,α-di(tert-butylperoxy)diisopropylbenzene, 2,5-dimethyl-2,5-di(tert-butylperoxy)hexane, 2,5-dimethyl-2,5-di(tert-butylperoxy)hex-3-yne, or tert-butyl cumyl peroxide.

Calculated based on the total weight of the biodegradable aliphatic polyester, a use amount of the peroxide may be 0.1-2 wt%, preferably 0.2-1 wt%.

Specifically, the above epoxide may be one or more of diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, ethylene glycol diglycidyl ether, diethylene glycol diglycidyl ether, polyethylene glycol diglycidyl ether, propylene glycol diglycidyl ether, dipropylene glycol diglycidyl ether, polypropylene glycol diglycidyl ether, polybutylene glycol diglycidyl ether, and a copolymer containing an epoxy group based on styrene, acrylate and/or methacrylate.

Calculated based on the total weight of the biodegradable aliphatic polyester, a use amount of the epoxide may be 0.1-2 wt%, preferably 0.2-1 wt%.

Specifically, the above bisoxazoline may be at least one of 2,2'-bis(2-oxazoline), bis(2-oxazolinyl)methane, 1,2-bis(2-oxazolinyl)ethane, 1,3-bis(2-oxazolinyl)propane, or 1,4-bis(2-oxazolinyl)butane; and is preferably at least one of 1,4-bis(2-oxazolinyl)benzene, 1,2-bis(2-oxazolinyl)benzene, or 1,3-bis(2-oxazolinyl)benzene.

Specifically, the above bisoxazine may be at least one of 2,2'-bis(2-dioxazine), bis(2-dioxazinyl)methane, 1,2-bis(2-dioxazinyl)ethane, 1,3-bis(2-dioxazinyl)propane, or 1,4-bis(2-dioxazinyl)butane; and is particularly at least one of 1,4-bis(2-dioxazinyl)benzene, 1,2-bis(2-dioxazinyl)benzene, or 1,3-bis(2-dioxazinyl)benzene.

Specifically, the above carbodiimide may be one or more of N,N'-di-2,6-diisopropylphenylcarbodiimide, N,N'-di-o-tolylcarbodiimide, N,N'-diphenylcarbodiimide, N,N'-dioctyldecylcarbodiimide, N,N'-di-2,6-dimethylphenylcarbodiimide, N-tolyl-N'-cyclohexylcarbodiimide, N,N'-di-2,6-di-tert-butylphenylcarbodiimide, N,N'-di-2,4,6-triisobutylphenylcarbodiimide, diisopropylcarbodiimide, dimethylcarbodiimide, diisobutylcarbodiimide, dioctylcarbodiimide, tert-butylisopropylcarbodiimide, di-β-naphthylcarbodiimide, or di-tert-butylcarbodiimide.

Calculated based on the total weight of the biodegradable aliphatic polyester, a use amount of the oxazoline, the oxazine, the caprolactam, or the carbodiimide may be 0.1-2 wt%, preferably 0.2-1 wt%.

The above chain propagation reaction is carried out under superatmospheric pressure or atmospheric pressure; a reaction temperature is 170-240°C, preferably 180-240°C; and a reaction time is 2-15 minutes, preferably 4-10 minutes.

A melt mass-flow rate (MFR) of the biodegradable aliphatic polyester prepared by the above preparation method is generally 1.0-40.0 g/10 min, preferably 2.5-32.0 g/10 min, and particularly preferably 3.5-22.0 g/10 min, according to ISO 1133-2-2011 (190°C, 2.16 kg).

The present invention further protects a biodegradable aliphatic polyester mixture. The biodegradable aliphatic polyester mixture includes the above biodegradable aliphatic polyester; and based on a total weight of the biodegradable aliphatic polyester mixture, a weight content of the biodegradable aliphatic polyester is 50-95 wt%, preferably 65-90 wt%.

In addition, the above biodegradable aliphatic polyester mixture may further include at least one polymer derived from a synthetic or natural source. The polymer derived from the synthetic source may be specifically at least one of polylactic acid (PLA), polybutylene succinate (PBS), poly(butylene succinate-co-adipate) (PBSA), poly(butylene succinate-co-sebacate) (PBSSe), polybutylene sebacate (PBSe), poly(butylene succinate-co-terephthalate) (PBST), poly(butylene adipate-co-terephthalate) (PBAT), poly(butylene sebacate-co-terephthalate) (PBSeT), or poly(butylene adipate-co-furandicarboxylate) (PBAF). Calculated based on the total weight of the biodegradable aliphatic polyester mixture, a weight content of the polymer derived from the synthetic source is 1-20 wt%, preferably 4-10 wt%.

The above polymer derived from the natural source may be specifically at least one of starch, cellulose, chitin, chitosan, alginate, proteins (such as gluten, zein, or casein), collagen, gelatin, natural rubber, rosin and its derivatives, or lignin and its derivatives. Preferably, the polymer is starch or a mixture of starch and other polymers derived from a natural source. The starch may be used in allosteric and gelatinized forms or in the form of a filler, and the starch may be distributed in a continuous phase, a dispersed phase, or a co-continuous form. Calculated based on the total weight of the biodegradable aliphatic polyester mixture, a mass content of the polymer derived from the natural source is 1-25 wt%, preferably 2-10 wt%.

Specifically, the above biodegradable aliphatic polyester or biodegradable aliphatic polyester mixture may be prepared by a reactive extrusion method, where an extruder used in the reactive extrusion method may be a single-screw extruder, a twin-screw extruder, or a multi-screw extruder, with an extrusion temperature of 140-220°C and a screw rotation speed of 200-500 rpm.

Use of the above biodegradable aliphatic polyester or biodegradable aliphatic polyester mixture in preparation of a food packaging film, an industrial packaging film, or an agricultural mulch film is also within the scope of protection of the present invention.

For the present invention, if a substance or mixture of substances exhibits a biodegradation percentage of at least 90%, as defined in DIN EN 13432, then the substance or mixture of substances possesses the characteristic of "biodegradability".

According to DIN EN 13432, during composting, air free of CO₂ is introduced into matured compost, and the compost is subjected to a specific temperature process. Herein, the biodegradability is defined as a biodegradation percentage represented by a ratio of a net amount of CO₂ released by a sample (after subtracting an amount of CO₂ released by compost without the sample) to a maximum amount of CO₂ that can be released by the sample (calculated based on a carbon content in the sample). After only a few days of composting, the biodegradable polyester and the biodegradable polyester mixture typically show obvious signs of degradation, such as fungal growth, cracking, and perforation. Other methods for determining the biodegradability are described, for example, in ASTM D5338 and ASTM D6400.

Compared with the prior art, the present invention has the following beneficial effects.

According to the present invention, by regulating the molecular weight distribution of the biodegradable aliphatic polyester and the mass percentage of the low-molecular polymer with the molecular weight of lower than 1,000 Dalton, the biodegradable aliphatic polyester has both a lower water vapor transmission rate and higher self-adhesiveness, which can impart good barrier properties and excellent self-adhesiveness to film materials.

### DESCRIPTION OF THE EMBODIMENTS

The following provides a further description of the present invention in conjunction with specific embodiments, but examples do not impose any limitation on the present invention in any form. Unless otherwise specified, raw materials and reagents used in the examples of the present invention are conventionally purchased raw materials and reagents.

### 1. Testing of molecular weights Mw and Mn of a biodegradable aliphatic polyester by gel permeation chromatography (GPC)

A chromatography system may be used at 40°C with a set of three tandem columns (with a particle diameter of 5 µm and pore sizes of 500 Å, 1,000 Å, and 10,000 Å, respectively), a refractive index detector, chloroform as an eluent (at a flow rate of 1 mL/min), and polystyrene as a reference standard for determination.

### 2. Testing of a mass percentage q of a low-molecular polymer ≤ 1,000 Dalton as measured by GPC

A determination method is as follows: A sample of a polyester (approximately 3-4 g) (F1), together with 30 mL of chloroform, is placed in a 200 mL flask. After the polyester is completely dissolved, 100 mL of a mixed solution of methanol and acetone at 1:1 (v/v) is added, and then the mixture is maintained under stirring for 2 hours. Then the mixture is filtered through a paper filter with a pore size of 8 µm, a polymer remaining on the filter is rinsed with acetone, the mixture is heated under an air flow at 70°C to fully evaporate the methanol/acetone solution, and a weight of a residual solid component (F2) is recorded. A sample of the solid component (approximately 10 mg) is dissolved in 10 mL of chloroform and analyzed by GPC according to the method disclosed above. Based on a molecular weight distribution curve recorded by a GPC instrument, a mass percentage (P1) of a low-molecular polymer with a molecular weight of ≤ 1,000 Dalton is determined. A mass percentage of a polyester oligomer with a molecular weight of ≤ 1,000 Dalton is calculated according to the following equation: q = (P1*F2)/F1*100%. Determination of the above Mn, Mw, and q may be performed on polyester pellets or films obtained therefrom.

### 3. Testing of a water vapor transmission rate with reference to the standard ASTM F1249-13

A film with a thickness of 12±2 µm is prepared by using a film blowing machine with a screw diameter of 40 mm at a film blowing temperature of 120-160°C, a die gap = 1 mm, a flow rate of 25±0.5 kg/h, and a blow-up ratio of 3.0. The water vapor transmission rate of the sample film is determined according to the standard ASTM F-1249.

### 4. Testing of shear peel strength with reference to the standard GB/T 10457-2009

10 specimens each having a length of 50 mm and a width of 25 mm are cut, with two specimens in each group, adhesive faces of the specimens are aligned in a length direction and overlapped from head to tail to form an overlap portion with a length of 15 mm and a width of 25 mm, the specimens are laid flat on a smooth plane, and the overlap portion of the specimens is rolled back and forth 3 times using a rubber roller (with a diameter of 40 mm, a length of 100 mm, and a mass of 300 g) to ensure that no air remains between two layers of plastic wraps at the overlap portion. The prepared specimens are placed under laboratory environmental conditions for 20 minutes and then tested.

The specimens in each group are stretched on a tensile tester, a force required to separate the two specimens is measured, and an arithmetic mean of the 5 groups of specimens is taken as a result. A stretching speed used in the test is 250 mm/min ± 50 mm/min.

### Example 1

A biodegradable aliphatic polyester is prepared by the following method.

Step i). 350 kg of succinic acid, 143 kg of adipic acid, 500 kg of 1,4-butanediol, and 0.35 kg of glycerol were physically mixed, and after completion of mixing, the mixture was transferred to an esterification reactor. The reaction mixture was subjected to an esterification reaction at a temperature of 200°C and a pressure of 1.1 bar for 3 hours to obtain an esterification product with an acid value of 438 mol/t.

Step ii). The esterification product obtained in the step i) was transferred to a vertical reactor equipped with a stirrer, 0.32 kg of tetrabutyl titanate was added, and the reaction mixture was subjected to a pre-polycondensation reaction in the reactor at 250°C and at a pressure of 0.60 bar for 110 minutes to obtain a pre-polymerized product with an acid value of 101 mol/t.

Step iii). The pre-polymerized product obtained in the step ii) was transferred to a horizontal reactor equipped with a stirrer and subjected to a polycondensation reaction at 245°C and at a pressure of 2.3 mbar for 80 minutes to obtain the biodegradable aliphatic polyester with an acid value of 22.8 mol/t and a melt index of 4.1 g/10 min (test standard and conditions: ISO 1133-2-2011, 190°C, 2.16 kg).

### Example 2

A biodegradable aliphatic polyester is prepared by the following method.

Step i). 350 kg of succinic acid, 143 kg of adipic acid, 650 kg of 1,4-butanediol, and 0.85 kg of glycerol were physically mixed, and after completion of mixing, the mixture was transferred to an esterification reactor. The reaction mixture was subjected to an esterification reaction at a temperature of 190°C and a pressure of 1.0 bar for 4 hours to obtain an esterification product with an acid value of 382 mol/t.

Step ii). The esterification product obtained in the step i) was transferred to a vertical reactor equipped with a stirrer, 0.40 kg of tetrabutyl titanate was added, and the reaction mixture was subjected to a pre-polycondensation reaction in the reactor at 250°C and at a pressure of 0.45 bar for 150 minutes to obtain a pre-polymerized product with an acid value of 78 mol/t.

Step iii). The pre-polymerized product obtained in the step ii) was transferred to a horizontal reactor equipped with a stirrer and subjected to a polycondensation reaction at 245°C and at a pressure of 1.6 mbar for 60 minutes to obtain the biodegradable aliphatic polyester with an acid value of 26.3 mol/t and a melt index of 5.4 g/10 min (test standard and conditions: ISO 1133-2-2011, 190°C, 2.16 kg).

### Example 3

A biodegradable aliphatic polyester is prepared by the following method.

Step i). 350 kg of succinic acid, 143 kg of adipic acid, 550 kg of 1,4-butanediol, and 1.2 kg of glycerol were physically mixed, and after completion of mixing, the mixture was transferred to an esterification reactor. The reaction mixture was subjected to an esterification reaction at a temperature of 180°C and a pressure of 0.95 bar for 2.5 hours to obtain an esterification product with an acid value of 501 mol/t.

Step ii). The esterification product obtained in the step i) was transferred to a vertical reactor equipped with a stirrer, 0.42 kg of tetrabutyl titanate was added, and the reaction mixture was subjected to a pre-polycondensation reaction in the reactor at 243°C and at a pressure of 0.35 bar for 90 minutes to obtain a pre-polymerized product with an acid value of 84 mol/t.

Step iii). The pre-polymerized product obtained in the step ii) was transferred to a horizontal reactor equipped with a stirrer and subjected to a polycondensation reaction at 243°C and at a pressure of 1.3 mbar for 70 minutes to obtain the biodegradable aliphatic polyester with an acid value of 20.5 mol/t and a melt index of 4.0 g/10 min (test standard and conditions: ISO 1133-2-2011, 190°C, 2.16 kg).

### Example 4

A biodegradable aliphatic polyester is prepared by the following method.

Step i). 350 kg of succinic acid, 143 kg of adipic acid, 510 kg of 1,4-butanediol, and 1.0 kg of glycerol were physically mixed, and after completion of mixing, the mixture was transferred to an esterification reactor. The reaction mixture was subjected to an esterification reaction at a temperature of 170°C and a pressure of 0.85 bar for 2.5 hours to obtain an esterification product with an acid value of 570 mol/t.

Step ii). The esterification product obtained in the step i) was transferred to a vertical reactor equipped with a stirrer, 0.38 kg of tetrabutyl titanate was added, and the reaction mixture was subjected to a pre-polycondensation reaction in the reactor at 242°C and at a pressure of 0.40 bar for 110 minutes to obtain a pre-polymerized product with an acid value of 95 mol/t.

Step iii). The pre-polymerized product obtained in the step ii) was transferred to a horizontal reactor equipped with a stirrer and subjected to a polycondensation reaction at 248°C and at a pressure of 1.4 mbar for 65 minutes to obtain the biodegradable aliphatic polyester with an acid value of 21.4 mol/t and a melt index of 9.8 g/10 min (test standard and conditions: ISO 1133-2-2011, 190°C, 2.16 kg).

### Example 5

A biodegradable aliphatic polyester is prepared by the following method.

Step i). 215 kg of succinic acid, 143 kg of adipic acid, 480 kg of 1,4-butanediol, and 1.2 kg of glycerol were physically mixed, and after completion of mixing, the mixture was transferred to an esterification reactor. The reaction mixture was subjected to an esterification reaction at a temperature of 180°C and a pressure of 1.10 bar for 4.0 hours to obtain an esterification product with an acid value of 361 mol/t.

Step ii). The esterification product obtained in the step i) was transferred to a vertical reactor equipped with a stirrer, 0.35 kg of tetrabutyl titanate was added, and the reaction mixture was subjected to a pre-polycondensation reaction in the reactor at 248°C and at a pressure of 0.58 bar for 145 minutes to obtain a pre-polymerized product with an acid value of 71 mol/t.

Step iii). The pre-polymerized product obtained in the step ii) was transferred to a horizontal reactor equipped with a stirrer and subjected to a polycondensation reaction at 255°C and at a pressure of 1.7 mbar for 100 minutes to obtain the biodegradable aliphatic polyester with an acid value of 28.9 mol/t and a melt index of 5.2 g/10 min (test standard and conditions: ISO 1133-2-2011, 190°C, 2.16 kg).

### Example 6

A biodegradable aliphatic polyester is prepared by the following method.

Step i). 350 kg of succinic acid, 350 kg of 1,4-butanediol, and 1.8 kg of glycerol were physically mixed, and after completion of mixing, the mixture was transferred to an esterification reactor. The reaction mixture was subjected to an esterification reaction at a temperature of 160°C and a pressure of 0.70 bar for 2.0 hours to obtain an esterification product with an acid value of 756 mol/t.

Step ii). The esterification product obtained in the step i) was transferred to a vertical reactor equipped with a stirrer, 0.40 kg of tetrabutyl titanate was added, and the reaction mixture was subjected to a pre-polycondensation reaction in the reactor at 250°C and at a pressure of 0.30 bar for 85 minutes to obtain a pre-polymerized product with an acid value of 110 mol/t.

Step iii). The pre-polymerized product obtained in the step ii) was transferred to a horizontal reactor equipped with a stirrer and subjected to a polycondensation reaction at 256°C and at a pressure of 2.5 mbar for 110 minutes to obtain the biodegradable aliphatic polyester with an acid value of 33.4 mol/t and a melt index of 12.3 g/10 min (test standard and conditions: ISO 1133-2-2011, 190°C, 2.16 kg).

### Example 7

A biodegradable aliphatic polyester is prepared by the following method.

Step i-1). 350 kg of succinic acid, 330 kg of 1,4-butanediol, and 1.3 kg of glycerol were physically mixed, and after completion of mixing, the mixture was transferred to an esterification reactor. The reaction mixture was subjected to an esterification reaction at a temperature of 180°C and a pressure of 1.0 bar for 100 minutes to obtain an esterification product with an acid value of 370 mol/t.

Step i-2). 143 kg of adipic acid and 150 kg of 1,4-butanediol were physically mixed, and after completion of mixing, the mixture was transferred to another esterification reactor. The reaction mixture was subjected to an esterification reaction at a temperature of 195°C and a pressure of 0.80 bar for 90 minutes to obtain an esterification product with an acid value of 721 mol/t.

Step ii). The esterification products obtained in the step i-1) and the step i-2) were mixed and transferred to a vertical reactor equipped with a stirrer, 0.45 kg of tetrabutyl titanate was added, and the reaction mixture was subjected to a pre-polycondensation reaction in the reactor at 245°C and at a pressure of 0.40 bar for 100 minutes to obtain a pre-polymerized product with an acid value of 86 mol/t.

Step iii). The pre-polymerized product obtained in the step ii) was transferred to a horizontal reactor equipped with a stirrer and subjected to a polycondensation reaction at 247°C and at a pressure of 1.1 mbar for 45 minutes to obtain a polycondensation product with an acid value of 15.8 mol/t.

Step iv). The polycondensation product obtained in the step iii) was transferred to a static mixer, 1.8 kg of hexamethylene diisocyanate was added, and the mixture was subjected to a blending reaction at 210°C for 7 minutes to obtain the biodegradable aliphatic polyester with an acid value of 16.7 mol/t and a melt index of 4.0 g/10min (test standard and conditions: ISO 1133-2-2011, 190°C, 2.16 kg).

### Comparative Example 1

A biodegradable aliphatic polyester is prepared by the following method.

Step i). 350 kg of succinic acid, 143 kg of adipic acid, 900 kg of 1,4-butanediol, and 3.2 kg of glycerol were physically mixed, and after completion of mixing, the mixture was transferred to an esterification reactor. The reaction mixture was subjected to an esterification reaction at a temperature of 210°C and a pressure of 0.65 bar for 3 hours to obtain an esterification product with an acid value of 221 mol/t.

Step ii). The esterification product obtained in the step i) was transferred to a vertical reactor equipped with a stirrer, 0.48 kg of tetrabutyl titanate was added, and the reaction mixture was subjected to a pre-polycondensation reaction in the reactor at 250°C and at a pressure of 0.20 bar for 156 minutes to obtain a pre-polymerized product with an acid value of 41 mol/t.

Step iii). The pre-polymerized product obtained in the step ii) was transferred to a horizontal reactor equipped with a stirrer and subjected to a polycondensation reaction at 252°C and at a pressure of 1.2 mbar for 50 minutes to obtain the biodegradable aliphatic polyester with an acid value of 12.1 mol/t and a melt index of 3.0 g/10 min (test standard and conditions: ISO 1133-2-2011, 190°C, 2.16 kg).

### Comparative Example 2

A biodegradable aliphatic polyester is prepared by the following method.

Step i). 350 kg of succinic acid, 143 kg of adipic acid, and 410 kg of 1,4-butanediol were physically mixed, and after completion of mixing, the mixture was transferred to an esterification reactor. The reaction mixture was subjected to an esterification reaction at a temperature of 160°C and a pressure of 1.2 bar for 2 hours to obtain an esterification product with an acid value of 841 mol/t.

Step ii). The esterification product obtained in the step i) was transferred to a vertical reactor equipped with a stirrer, 0.44 kg of tetrabutyl titanate was added, and the reaction mixture was subjected to a pre-polycondensation reaction in the reactor at 230°C and at a pressure of 0.70 bar for 120 minutes to obtain a pre-polymerized product with an acid value of 167 mol/t.

Step iii). The pre-polymerized product obtained in the step ii) was transferred to a horizontal reactor equipped with a stirrer and subjected to a polycondensation reaction at 245°C and at a pressure of 2.1 mbar for 90 minutes to obtain the biodegradable aliphatic polyester with an acid value of 58.2 mol/t and a melt index of 15.2 g/10 min (test standard and conditions: ISO 1133-2-2011, 190°C, 2.16 kg).

### Comparative Example 3

A biodegradable aliphatic polyester is prepared by the following method.

Step i). 350 kg of succinic acid, 143 kg of adipic acid, 680 kg of 1,4-butanediol, and 1.8 kg of glycerol were physically mixed, and after completion of mixing, the mixture was transferred to an esterification reactor. The reaction mixture was subjected to an esterification reaction at a temperature of 210°C and a pressure of 0.8 bar for 3 hours to obtain an esterification product with an acid value of 327 mol/t.

Step ii). The esterification product obtained in the step i) was transferred to a vertical reactor equipped with a stirrer, 0.28 kg of tetrabutyl titanate was added, and the reaction mixture was subjected to a pre-polycondensation reaction in the reactor at 240°C and at a pressure of 0.75 bar for 80 minutes to obtain a pre-polymerized product with an acid value of 112 mol/t.

Step iii). The pre-polymerized product obtained in the step ii) was transferred to a horizontal reactor equipped with a stirrer and subjected to a polycondensation reaction at 250°C and at a pressure of 1.4 mbar for 50 minutes to obtain a polycondensation product with an acid value of 21.3 mol/t.

Step iv). The polycondensation product obtained in the step iii) was transferred to a static mixer, 2.0 kg of hexamethylene diisocyanate was added, and the mixture was subjected to a blending reaction at 220°C for 10 minutes to obtain the biodegradable aliphatic polyester with an acid value of 23.1 mol/t and a melt index of 4.4 g/10min (test standard and conditions: ISO 1133-2-2011, 190°C, 2.16 kg).

Physical property parameters and properties of the biodegradable aliphatic polyesters in Examples 1-7 and Comparative Examples 1-3 are as shown in Tables 1 and 2.

**Table 1 Physical property parameters of the biodegradable aliphatic polyesters in examples and comparative examples**

| | Example | | | | | | | Comparative Example | | |
|---|---|---|---|---|---|---|---|---|---|---|
| | 1 | 2 | 3 | 4 | 5 | 6 | 7 | 1 | 2 | 3 |
| Molar content of succinic acid calculated based on a total molar content of an aliphatic dicarboxylic acid (mol%) | 75.0 | 75.0 | 75.0 | 75.0 | 65.0 | 100.0 | 75.0 | 75.0 | 75.0 | 75.0 |
| Molar content of adipic acid calculated based on a total molar content of an aliphatic dicarboxylic acid (mol%) | 25.0 | 25.0 | 25.0 | 25.0 | 35.0 | 0.0 | 25.0 | 25.0 | 25.0 | 25.0 |
| MFR g/10 min (190C°, 2.16 kg) | 4.1 | 5.4 | 4.0 | 9.8 | 5.2 | 12.3 | 4.0 | 3.0 | 15.2 | 4.4 |
| Acid value (mol/t) | 22.8 | 26.3 | 20.5 | 21.4 | 28.9 | 33.4 | 16.7 | 12.1 | 58.2 | 23.1 |
| Mn | 68456 | 62331 | 70254 | 58324 | 63254 | 47324 | 68652 | 74136 | 41467 | 67004 |
| Mw | 110862 | 117742 | 116021 | 107820 | 98021 | 93820 | 116213 | 99730 | 84976 | 104567 |
| Percentage of an oligomer q (%) | 1.67 | 1.72 | 1.38 | 1.11 | 1.91 | 1.55 | 1.35 | 2.21 | 1.94 | 2.13 |

**Table 2 Properties of the biodegradable aliphatic polyesters in examples and comparative examples**

| | Mw/Mn | Mw/q | Water vapor transmission rate g/(d·m²) | Shear peel strength N/cm² |
|---|---|---|---|---|
| Example 1 | 1.62 | 66384 | 472 | 0.72 |
| Example 2 | 1.89 | 68455 | 410 | 0.79 |
| Example 3 | 1.65 | 84073 | 330 | 0.87 |
| Example 4 | 1.85 | 97135 | 227 | 0.96 |
| Example 5 | 1.55 | 51320 | 741 | 0.61 |
| Example 6 | 1.98 | 60529 | 705 | 0.66 |
| Example 7 | 1.69 | 86084 | 317 | 0.92 |
| Comparative Example 1 | 1.35 | 45127 | 791 | 0.56 |
| Comparative Example 2 | 2.05 | 43802 | 848 | 0.51 |
| Comparative Example 3 | 1.56 | 49092 | 760 | 0.58 |

According to the data in Table 2, it can be seen that the biodegradable aliphatic polyesters in Examples 1-7 have a water vapor transmission rate of less than 750 g/(d•m²) and a shear peel strength reaching above 0.60 N/cm², indicating that the biodegradable aliphatic polyester of the present invention possesses not only good barrier properties but also excellent self-adhesiveness.

The above examples of the present invention are only instances provided for clearly illustrating the present invention and are not limitations of the embodiments of the present invention. For those of ordinary skill in the art, other changes or alterations in different forms can also be made on the basis of the above description. It is neither necessary nor possible to exhaustively enumerate all the embodiments herein. Any modifications, equivalent substitutions, improvements, and the like made within the spirit and principles of the present invention shall fall within the scope of protection of the claims of the present invention.

## Claims

1. A biodegradable aliphatic polyester, comprising units derived from at least one aliphatic dicarboxylic acid and units derived from at least one aliphatic diol, and satisfying the following conditions: 1.54 ≤ Mw/Mn ≤ 1.98, and Mw/q ≥ 50,000,
wherein q is a mass percentage of a low-molecular polymer with a molecular weight of ≤ 1,000 Dalton, as determined by gel permeation chromatography (GPC), of the biodegradable aliphatic polyester.

2. The biodegradable aliphatic polyester according to claim 1, wherein the Mw/Mn is 1.65-1.85, and 70,000 ≤ Mw/q ≤ 110,000.

3. The biodegradable aliphatic polyester according to claim 1, wherein the units derived from the aliphatic dicarboxylic acid comprise an aliphatic dicarboxylic acid having 2-22 carbon atoms in a main chain and an ester thereof.

4. The biodegradable aliphatic polyester according to claim 3, wherein the aliphatic dicarboxylic acid is at least one of succinic acid, adipic acid, azelaic acid, sebacic acid, or tridecanedioic acid.

5. The biodegradable aliphatic polyester according to claim 1, wherein the units derived from the aliphatic diol comprise an aliphatic diol having 2-13 carbon atoms in a main chain.

6. The biodegradable aliphatic polyester according to claim 5, wherein the aliphatic diol is at least one of 1,2-ethanediol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, or 1,13-tridecanediol.

7. The biodegradable aliphatic polyester according to claim 1, comprising the following components:
A) an aliphatic dicarboxylic acid component:
a1) 65-100 mol% of a derivative of succinic acid or an ester thereof, or a mixture thereof, calculated based on a total amount of a1) and a2); and
a2) 0-35 mol% of a derivative of adipic acid or an ester thereof, or a mixture thereof, calculated based on the total amount of a1) and a2), wherein a sum of molar percentages of the components a1) and a2) is 100 mol%; and
B) an aliphatic diol component being 1,4-butanediol, wherein a molar ratio of the aliphatic diol component to the aliphatic dicarboxylic acid component is ≥ 1.

8. The biodegradable aliphatic polyester according to claim 7, wherein in the aliphatic dicarboxylic acid component, a1) is 73-80 mol% of a derivative of succinic acid or an ester thereof, or a mixture thereof; and
in the aliphatic dicarboxylic acid component, a2) is 20-27 mol% of a derivative of adipic acid or an ester thereof, or a mixture thereof.

9. The biodegradable aliphatic polyester according to any one of claims 1-8, wherein a water vapor transmission rate of the biodegradable aliphatic polyester, as determined according to an ASTM F1249-13 standard under conditions of a sample thickness of 12±2 µm at 40°C and RH = 60%, is ≤ 750 g/(d·m²); preferably ≤ 480 g/(d·m²); and more preferably ≤ 330 g/(d·m²).

10. The biodegradable aliphatic polyester according to any one of claims 1-8, wherein a shear peel strength of the biodegradable aliphatic polyester, as determined according to a GB/T 10457-2009 standard under a condition of a sample thickness of 12±2 µm, is ≥ 0.6 N/cm²; preferably ≥ 0.72 N/cm²; and more preferably ≥ 0.85 N/cm².

11. A method for preparing the biodegradable aliphatic polyester according to any one of claims 1-10, comprising the following steps:
step i): mixing the aliphatic dicarboxylic acid or a derivative thereof with the aliphatic diol to carry out an esterification reaction or a transesterification reaction to obtain an esterification product;
step ii): subjecting the esterification product in the step i) to a pre-polycondensation reaction to obtain a pre-polymerized product; and
step iii): subjecting the pre-polymerized product in the step ii) to a polycondensation reaction until an acid value of a formed polycondensation product, as determined according to a GB/T 32366-2015 standard, is 15-50 mol/t, to obtain the biodegradable aliphatic polyester,
wherein an acid value of the esterification product in the step i), as determined according to the GB/T 32366-2015 standard, is 360-770 mol/t; and an acid value of the pre-polymerized product in the step ii), as determined according to the GB/T 32366-2015 standard, is 70-110 mol/t.

12. Use of the biodegradable aliphatic polyester according to any one of claims 1-10 in preparation of a food packaging film, an industrial packaging film, or an agricultural mulch film.
